(19)

Europäisches
Patentamt
European
Patent Office
Office européen
des brevets

(11)  **EP 2 637 126 B1**

(12)  **EUROPEAN PATENT SPECIFICATION**

(45) Date of publication and mention
of the grant of the patent:
**17.01.2018  Bulletin 2018/03**

(51) Int Cl.:
***G06K 9/00*** *(2006.01)*

(21) Application number: **13156660.6**

(22) Date of filing: **26.02.2013**

(54) **Method and apparatus for detecting vehicle**

Verfahren und Vorrichtung zur Erkennung eines Fahrzeugs

Procédé et appareil de détection de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.03.2012  CN 201210057550**

(43) Date of publication of application:
**11.09.2013  Bulletin 2013/37**

(73) Proprietor: **Ricoh Company, Ltd.
Tokyo 143-8555 (JP)**

(72) Inventors:
 • **Liu, Dianchao
 100044 Beijing (CN)**
 • **Liu, Tong
 100044 Beijing (CN)**
 • **Liu, Yuan
 100044 Beijing (CN)**
 • **Shi, Zhongchao
 100044 Beijing (CN)**
 • **Wang, Gang
 100044 Beijing (CN)**

(74) Representative: **Schwabe - Sandmair - Marx
Patentanwälte Rechtsanwalt
Partnerschaft mbB
Joseph-Wild-Straße 20
81829 München (DE)**

(56) References cited:
**US-B2- 7 620 208**

• **YAQIAN LI ET AL: "Vehicle detection based on
the stereo concept of (axis, width, disparity)
symmetry map", INTELLIGENT
TRANSPORTATION SYSTEMS, 2008. ITSC 2008.
11TH INTERNATIONAL IEEE CONFERENCE ON,
IEEE, PISCATAWAY, NJ, USA, 12 October 2008
(2008-10-12), pages 778-783, XP031383479, ISBN:
978-1-4244-2111-4**
• **KUEHNLE A ED - CALDERARA SIMONE ET AL:
"SYMMETRY-BASED RECOGNITION OF
VEHICLE REARS", PATTERN RECOGNITION
LETTERS, ELSEVIER, AMSTERDAM, NL, vol. 12,
no. 4, 1 April 1991 (1991-04-01), pages 249-258,
XP008107374, ISSN: 0167-8655, DOI:
10.1016/0167-8655(91)90039-O [retrieved on
2004-08-25]**
• **SUN C ED - CALDERARA SIMONE BANDINI
STEFANIA CUCCHIARA RITA: "Symmetry
detection using gradient information", PATTERN
RECOGNITION LETTERS, ELSEVIER,
AMSTERDAM, NL, vol. 16, no. 9, 1 September
1995 (1995-09-01), pages 987-996, XP004062477,
ISSN: 0167-8655, DOI:
10.1016/0167-8655(95)00049-M**
• **GARETH LOY ET AL: "Detecting Symmetry and
Symmetric Constellations of Features", 1
January 2006 (2006-01-01), COMPUTER VISION -
ECCV 2006 LECTURE NOTES IN COMPUTER
SCIENCE;;LNCS, SPRINGER, BERLIN, DE,
PAGE(S) 508 - 521, XP019036463, ISBN:
978-3-540-33834-5 * section 3 "Symmetry from
feature constellations" ***

**(Cont. next page)**

• **ZIELKE T ET AL: "Intensity and Edge-Based Symmetry Detection with an Application to Car-Following", CVGIP IMAGE UNDERSTANDING, ACADEMIC PRESS, DULUTH, MA, US, vol. 58, no. 2, 1 September 1993 (1993-09-01), pages 177-190, XP024888651, ISSN: 1049-9660, DOI: 10.1006/CIUN.1993.1037 [retrieved on 1993-09-01]**

**Description**

**BACKGROUND OF THE INVENTION**

**1. Field of the Invention**

The present invention generally relates to vehicle detection, and specifically, a method and an apparatus for detecting a vehicle by using a disparity map.

**2. Description of the Related Art**

The driving assistance system is becoming more popular. The system for detecting the vehicle on the road, as a subsystem of the driving assistance system, can help to detect or recognize the presence or absence, distance or speed of the vehicle and avoid traffic accidents.

In general, there are two types of methods for detecting the vehicle: a method of using features and a method of modeling.

In the method of using features, a vehicle in a grey scale map is located by combining some vehicle features, such as an edge, color, texture, symmetry and shadow of the vehicle. The method of using features is greatly affected by light conditions. Moreover, it is difficult to detect the vehicle accurately in cases where the vehicle and the background are highly mixed or parts around the vehicle in the image overlap.

In the method of modeling, a stereo vision model related to 3D reconstruction or 3D modeling is determined. However, the method of modeling needs a lot of computing resources and time.

In the cited reference 1 ("Multi-Resolution Vehicle Detection Using Artificial Vision", Broggi, A., Cerri, P., et al., Intelligent Vehicles Symposium, 2004 IEEE, pages 310-314, June 14-17, 2004), a method for detecting a vehicle from a grey scale map by using symmetry is disclosed. This method relates to a method of determining symmetry of borders of an object from the grey scale map and traversing or scanning the image so as to search out a center of symmetry. In this method, it is inefficient and it is difficult to process a complex background of the grey scale map, because the whole image is traversed or scanned.

In the cited reference 2 ("U-V-Disparity: An Efficient Algorithm for Stereovision Based Scene Analysis", Zhencheng Hu and Keiichi Uchimur, Proceedings of the IEEE Intelligent Vehicles Symposium 2005), a method for detecting a vehicle is disclosed. In this method, a line is detected by using a U-V-disparity map, and surfaces of an original image are determined so as to divide or determine the vehicle. In this method, it is difficult to process in cases where the vehicle is shielded or two vehicles are connected.

YAQIAN LI ET AL: "Vehicle detection based on the stereo concept of (axis, width, disparity) symmetry map", INTELLIGENT TRANSPORTATION SYSTEMS, 2008, ITSC 2008. 11TH INTERNATIONAL IEEE CONFERENCE ON, IEEE, PISCATAWAY, NJ, USA, 12. October 2008 (2008-10-12), pages 778-783, XP031383479, ISBN: 978-1-4244-2111-4 discloses a method for vehicle detection based on the symmetry content of a disparity sparse map. In order to detect an obstacle in an image such as a vehicle, a symmetry map is computed for each selected disparity value.

**SUMMARY OF THE INVENTION**

The present invention is made in light of the above problems, and may provide a method and an apparatus for detecting the vehicle reliably and rapidly. The invention is defined by the appended independent claims. The dependent claims relate to specific embodiments of the invention.

**BRIEF DESCRIPTION OF THE DRAWINGS**

FIG. 1 is an overall flowchart illustrating the method of detecting the vehicle according to an embodiment of the present invention;
FIG. 2 is a schematic drawing illustrating the vehicle candidate region having plural vehicles;
FIG. 3 is a flowchart illustrating the first example of the calculating method of determining the degree of symmetry of the vehicle candidate regions according to the embodiment of the present invention;
FIG. 4 is a schematic drawing illustrating the initial status of the outer edge of the vehicle candidate region;
FIG. 5 is a schematic drawing illustrating a refined selection of the outer edge of the vehicle candidate region as illustrated in FIG. 4;
FIG. 6 is a schematic drawing illustrating a refined selection of the outer edge of the vehicle candidate region as illustrated in FIG. 5;

FIG. 7 is a flowchart illustrating the second example of the calculating method of determining the degree of symmetry of the vehicle candidate regions according to the embodiment of the present invention;

FIG. 8 is a schematic drawing illustrating the disposed subregions according to the embodiment of the present invention;

FIG. 9 is a flowchart illustrating the third example of the calculating method of determining the degree of symmetry of the vehicle candidate regions according to the embodiment of the present invention;

FIG. 10 is a schematic drawing illustrating optimization of the axis of symmetry and adjustment of the vehicle candidate region by moving the axis of symmetry;

FIG. 11 is a schematic drawing illustrating an example of the histogram in the gradient direction on the left side of the vehicle candidate region;

FIG. 12 is a schematic drawing illustrating an example of the histogram in the gradient direction on the right side of the vehicle candidate region;

FIG. 13 is a schematic drawing illustrating an example of the histogram in the gradient direction on the left side of the mirror transformed vehicle candidate region;

FIG. 14 is a schematic drawing illustrating a new vehicle candidate region obtained by merging the vehicle candidate regions;

FIG. 15 is a block diagram illustrating a overall configuration of the apparatus for detecting the vehicle according to the embodiment of the present invention; and

FIG. 16 is a block diagram illustrating the hardware of a system for detecting the vehicle according to the embodiment of the present invention.

## DETAILED DESCRIPTION OF THE PREFERRED EMBODIMENTS

In the following, embodiments of the present invention are described with reference to the accompanying drawings, so as to facilitate the understanding of the present invention.

First, essential concepts will be introduced as follows.

Disparity indicates an angle made by two straight lines that are drawn from opposite ends of a base line to a distant object. That is to say, it means a direction difference generated by looking at the same object from two points having a certain separation distance. The angle that is generated by looking at the two points from the object is called a "disparity angle" of the two points, and the distance between the two points is called a "basic line". A distance between the object and an observer can be calculated as long as the disparity angle and length of the basic line are known.

A disparity map is an image that is based on a reference image, the size of the disparity is the size of the reference image, and an element value of the disparity map is a disparity value. The disparity map includes distance information of a scene. The disparity map may be calculated from left and right images picked up by a binocular camera or calculated from a depth map of a stereogram.

The coordinates of a point of a common two-dimensional disparity map are represented by $(u,v)$, where $u$ is abscissa and $v$ is ordinate; a pixel value of a pixel at a point $(u,v)$ is represented by $d(u,v)$, which represents the disparity of the point $(u, v)$. In this paper, disparity is also called "depth" in some cases.

The embodiments of the present invention will be described in the following order:

<1. the first embodiment>

<1.1 an example of the overall process of the method of detecting the vehicle>

<1.2 The first example of the calculating method of determining a degree of symmetry of the vehicle candidate regions>

<1.3 The second example of the calculating method of determining a degree of symmetry of the vehicle candidate regions>

<1.4 The third example of the calculating method of determining a degree of symmetry of the vehicle candidate regions>

<1.5 an example of calculating the degree of symmetry of the vehicle candidate region based on the histogram in the gradient direction>

<2. other modification of the embodiment>

<3. overall configuration of the apparatus for detecting the vehicle>

<4. hardware configuration of a system for detecting the vehicle>

<5. Summary>

<1. the first embodiment>

<1.1 an example of the overall process of the method of detecting the vehicle>

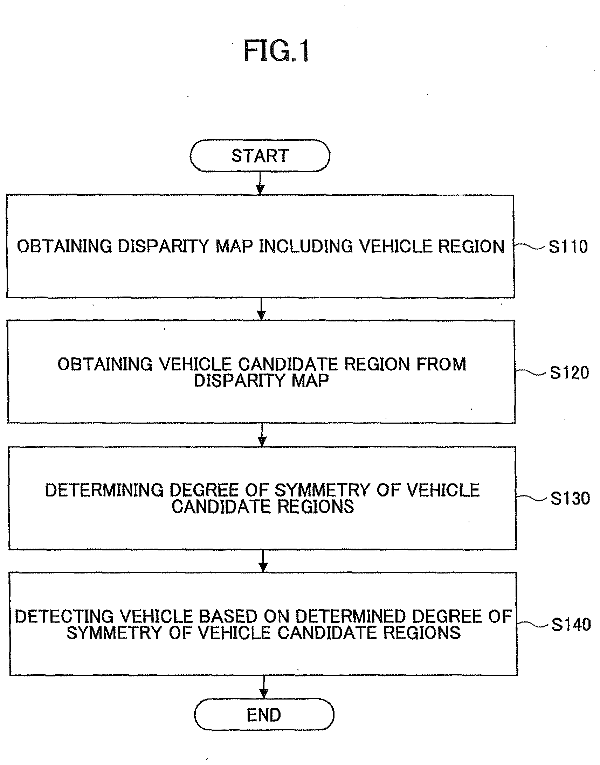

FIG. 1 is an overall flowchart illustrating the method of detecting the vehicle according to the embodiment of the present invention.

In step S110, a disparity map (disparity map) including a vehicle region is obtained. The present invention may apply to any method of obtaining the disparity map in the art. For example, a disparity map having the vehicle region may be obtained by a binocular camera, a multi-camera, or a stereoscope camera on the vehicle and then calculating. Specifically, the disparity map may be calculated from a left image and a right image that is picked up by a binocular camera on the vehicle. Or the disparity map may be obtained from a depth map that is obtained from a stereo image.

In step S120, a vehicle candidate region is obtained from the disparity map.

In this step, the vehicle candidate regions are roughly extracted so as to detect the vehicle in detail in the subsequent steps. In this way, the focus of the region can be outlined so as to avoid scanning the whole image as described in cited reference 1 in the related art. Accordingly, efficiency of the subsequent process can be remarkably improved.

Specifically, the vehicle candidate region may be obtained from the disparity map by searching for a connected region in a predetermined range of disparity from the disparity map. In view of a warning to the driver, the range of disparity may be a range that is close to the owners vehicle (the driver), such as 800 - 650, and the range may be the length of the vehicle, for example. In this way, the image can be traversed gradually according to the distance to the owners vehicle from near to far, and the vehicle can be detected by a distance group as needed. For example, if it is considered that only the detections of the vehicles within a distance of 20 meters to the owners vehicle is enough, no detection of the vehicles exceeding a distance of 20 meters are needed. The connected region may not be an enclosed region, but a case where it is connected at 3 sides or a case where the roughly detected height and width of the connected region are greater than a predetermined threshold. The scope and size of the connected region may be set optionally as needed.

Moreover, in this step, a size filtering may be performed properly. For example, the connected regions having a small area may be filtered, because such connected regions might be background noise.

Additionally, in this step, a position filtering may be performed. For example, all points having a height to the road surface that is greater than a predetermined height threshold (for example, rh is a value greater than the height of an ordinary vehicle) may be removed, because no vehicle can appear in the sky. The points having a height greater than rh might be a tall building or a telegraph pole, etc.

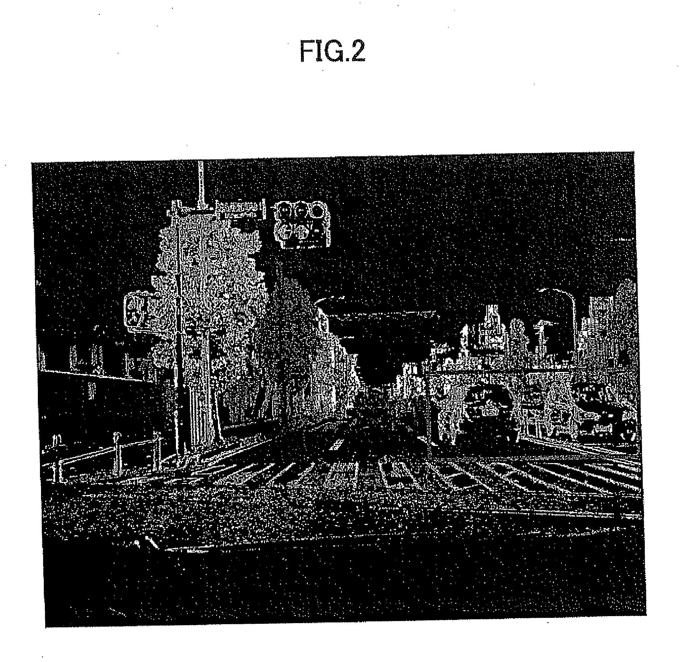

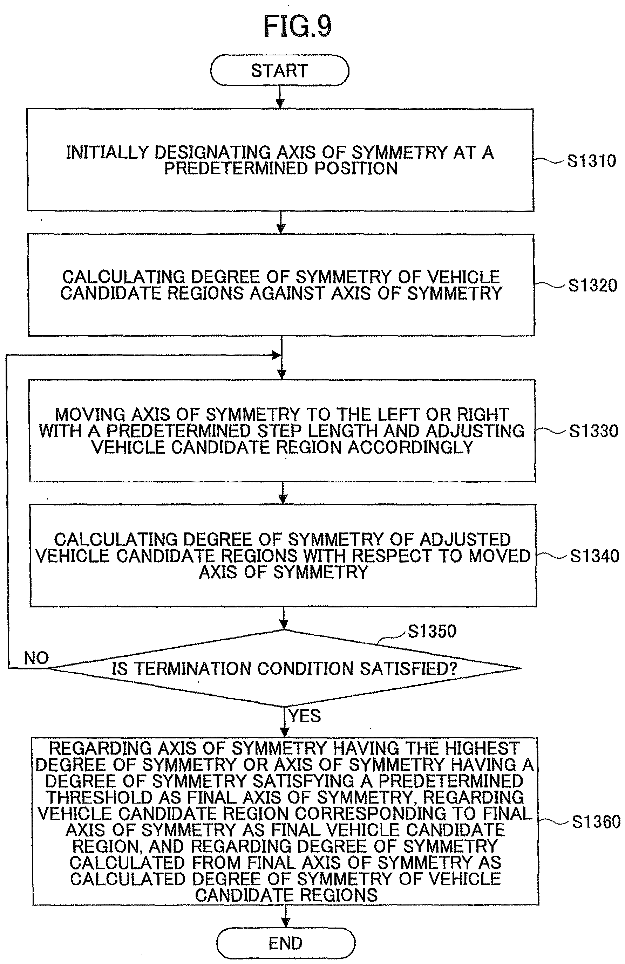

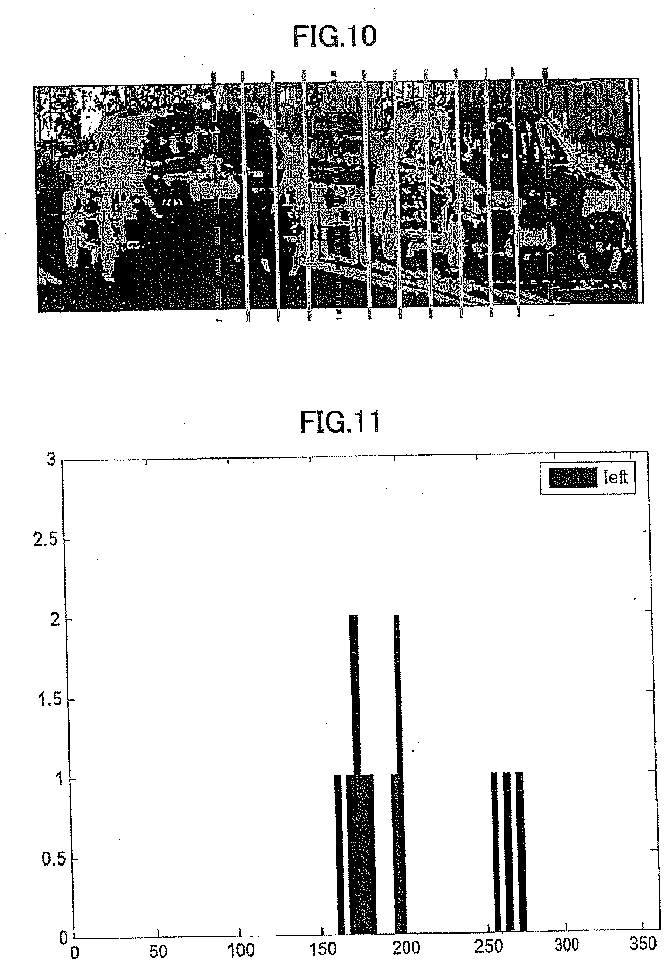

In additional, if the width-height ratio of a connected region meets an appropriate range of ratio, such as 0.8~1.2, the connected region may be regarded as a region having plural vehicle candidate regions. For example, the connected region in the box as illustrated in FIG. 2 has two vehicle regions. As described in more detail with reference to FIG. 9 below, the vehicle connected together or a large vehicle candidate region may be further divided by moving the axis of symmetry and scanning as illustrated in FIG. 10.

The scope for searching the vehicle candidate region may be outlined by combining lane partition lines detected by a lane partition line detecting method.

In addition, as described below in detail, the step of obtaining the vehicle candidate region may comprise dividing or merging the vehicle candidate regions based on a result determined by a degree of symmetry of the vehicle candidate regions.

In step S130, degree of symmetry of the vehicle candidate regions are determined.

The present invention may apply to any method of calculating a degree of symmetry of regions. For example, as a method in the art, left and right mirror images are matched by using an axis of symmetry in the middle, the difference between the values of the matched corresponding pixel points of the left and right sides is calculated, the sum of the absolute values of the differences of pixel points are calculated, the degrees of symmetry of regions are estimated based on the sum of the absolute values (alternatively, a normalization may be performed), where the characteristics for calculating may be grey level, boundary value or gradient value.

Preferably, the degree of symmetry of the vehicle candidate region may be calculated based on the gradient of points on the outer edge of the vehicle candidate region. The reason is in that points of the outer edge of the vehicle are most remarkable and not easily blurred or lost in the disparity map; and the gradient feature is also remarkable, as the gradient direction changes dramatically and the absolute value of gradient is greater, because the outer edge of the vehicle is a border. So that, the method of calculating the degree of symmetry of the vehicle candidate regions based on the gradient of the points on the outer edge of the vehicle candidate region, have a good robustness and accuracy and are not easily effected.

The method of determining the degree of symmetry of the vehicle candidate region according to the embodiment of the present invention will be described with reference to FIG.s 3, 7 and 9 below.

In step S140, the vehicle is detected based on the determined degree of symmetry of the vehicle candidate region.

For example, the determined value of the degree of symmetry of the vehicle candidate regions may be compared with a predetermined threshold of the degree of symmetry, and the vehicle candidate region may be regarded as the vehicle if the degree of symmetry of the vehicle candidate regions is greater than or equal to the predetermined threshold of the degree of symmetry. The predetermined threshold of the degree of symmetry here may be learned by a learning algorithm or be set artificially according to experience.

Moreover, the vehicle may be detected by combining the method of determining the degree of symmetry of the vehicle candidate regions and other vehicle detecting methods. For example, if a result of the vehicle detection has been obtained by the grey scale map, the result of the vehicle detection according to the grey scale map may be further verified by the degree of symmetry of the vehicle candidate regions determined in step S140. For example, if the result of the vehicle detection according to the grey scale map is that the detected degree of symmetry of the corresponding region of the vehicle is low, the vehicle detected by the grey scale map may be denied or abandoned, or a correctness probability of the detection result of the vehicle may be reduced. For example, the degree of symmetry of the disparity map of the vehicle may be regarded as a weighting means; if the vehicle detected by the grey scale map has a low degree of symmetry in the corresponding regions of the disparity map, the correctness probability of the detection result may be reduced by the low degree of symmetry as a negating factor.

Certainly, with respect to the determined degree of symmetry of the vehicle candidate regions, the detection result according to the degree of symmetry may also be further verified by other features of the vehicle. For example, the vehicle detected by the method of detecting the degree of symmetry according to the embodiment of the present invention may be further checked for whether a shape feature of the vehicle region meets the shape of an ordinary vehicle or not, whether the vehicle region has a number plate region or not, or whether the color of the grey scale map region corresponding to the vehicle region meets an ordinary color feature of the vehicle or not, etc.

According to the method for detecting the vehicle of the present invention, the vehicle candidate regions are obtained or segmented, the degree of symmetry of the vehicle candidate regions are determined, and the vehicle is detected based on the determined degree of symmetry of the vehicle candidate regions, by utilizing the characteristics whereas the disparity map has a uniform depth information and a projecting edge. Compared with the conventional method for detecting the vehicle based on the grey scale map, the method for detecting the vehicle according to the present invention can detect by a distance group without dependence on light conditions. First the vehicle candidate regions are roughly obtained or segmented, and then the degree of symmetry of the vehicle candidate regions are calculated; therefore, the present invention has a higher efficiency of processing, compared with a method for processing the whole image without classification. The method for detecting the vehicle according to the characteristics of the symmetry of the vehicle of the disparity map can detect the vehicle robustly and accurately.

<1.2 The first example of the calculating method of determining the degree of symmetry of the vehicle candidate regions>

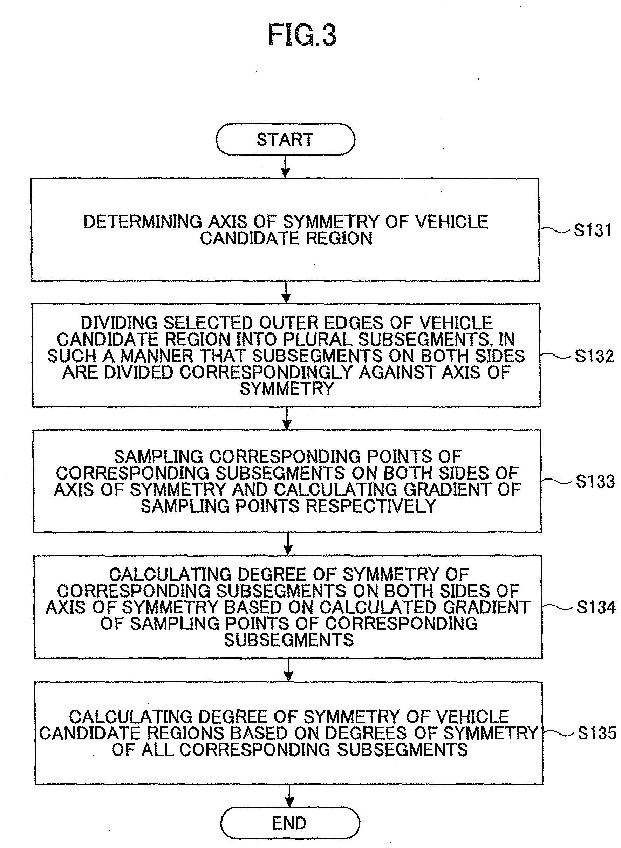

FIG. 3 is a flowchart illustrating the first example of the calculating method of determining the degree of symmetry of the vehicle candidate regions according to the embodiment of the present invention. This method may be used in step S130 of the method of detecting the vehicle as illustrated in FIG. 1.

In step S131, an axis of symmetry of the vehicle candidate region is determined.

In general, the axis of symmetry is disposed vertically on the central position in the horizontal direction of the vehicle candidate region. Certainly, if the direction of the image is perpendicular to the image as illustrated in FIG. 2, the axis of symmetry is disposed horizontally on the central position in the vertical direction of the vehicle candidate region. With respect to the calculation of the central position in the horizontal direction $x_c$, as a calculation example, if the abscissa value of the leftmost point in the horizontal direction of the vehicle candidate region is set $x_1$, and the ordinate value of the rightmost point in the horizontal direction is set $x_2$, the central position in the horizontal direction $x_c$ may be calculated according to $x_c=(x_1+x_2)/2$. Alternatively, as a complex calculation example, if the average value of several corresponding point pairs on the leftmost outer edge and the rightmost outer edge of the connected region is calculated, where the obtained n corresponding point pairs is set [point $PL_1(xl_1,y_1)$, point $PR_1(xr_1,y_1)$], [point $PL_2(xl_2, y_2)$, (point $PR_2(xr_2,y_2)$)], ... [point $PL_n(xl_n,y_n)$, point $PR_n(xr_n,y_n)$] and n is an integer greater than 2, the central position in the horizontal direction $x_c$ may be calculated according to $x_c=(xl_1+xr_1+l_2+xr_2+...+xl_n+xr_n)/2n$.

However, it should be noted that the above method of determining the axis of symmetry is just an example, the present invention may apply any method of determining the axis of symmetry.

In step S132, the selected outer edges of the vehicle candidate region are divided into plural subsegments in such a manner that the subsegments on both sides are divided accordingly with respect to the axis of symmetry.

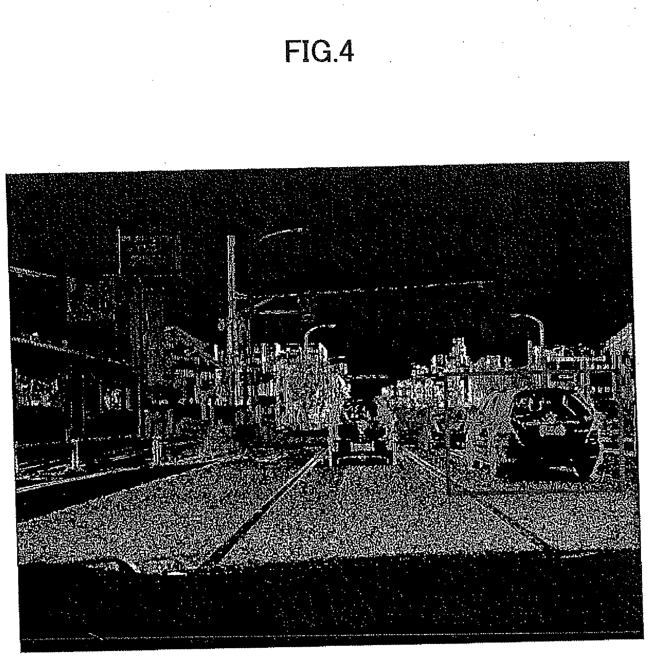

Here "the selected outer edges" means that the outer edge of the vehicle candidate region is blurred or there are plural outer edges. For example, in the connected region of the block as illustrated in FIG. 4, if the outer edge is simply selected from the connected region, the edge of the front of the vehicle will be selected as a left outer edge and the edge of the rear of the vehicle will be selected as a right outer edge, respectively, and the selected left and right outer edges will be compared; therefore, the degree of symmetry of the vehicle candidate regions will be bad.

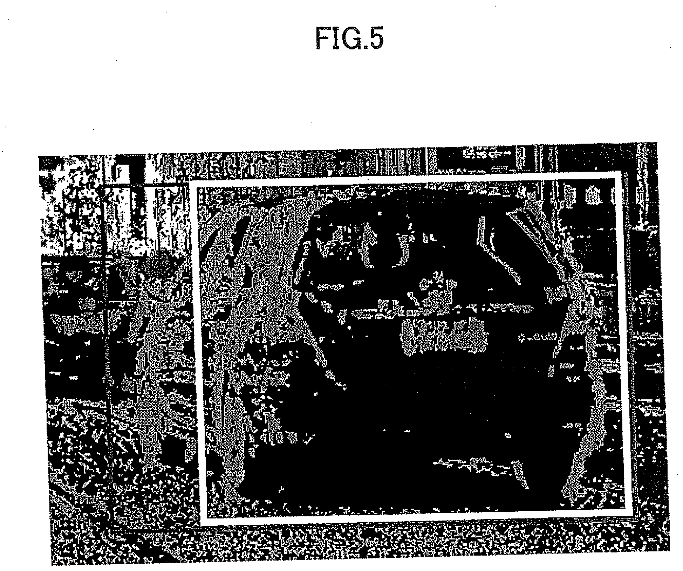

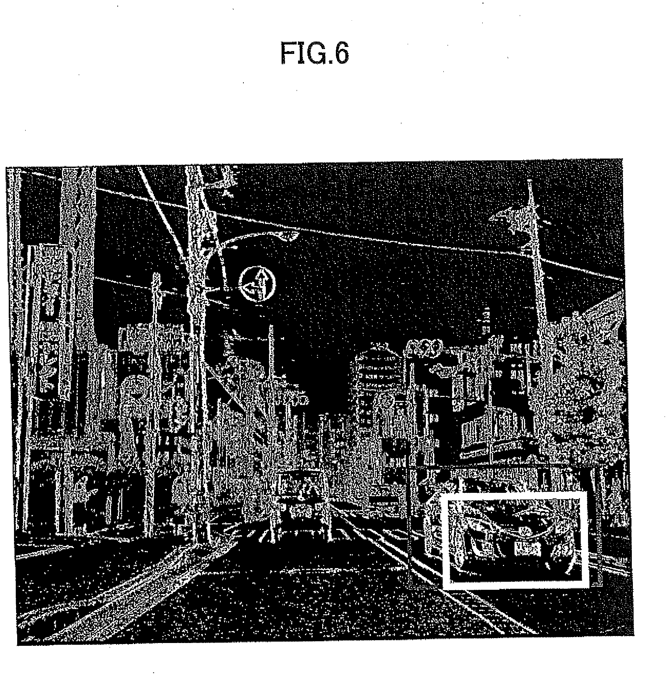

In this case, as a simple solution, the depth of the left and right outer edges in the disparity map should be limited to roughly the same depth, namely, the disparity of those two in the disparity map should be similar. Here "roughly the same" or "similar" means that the difference between the disparity values of the left and right outer edges should be less than a predetermined threshold, where the predetermined threshold may be set as needed. In this way, for example, the edge of the inner block as illustrated in FIG. 5 may be selected as the outer edge by a predetermined threshold a, or the edge of the inner block as illustrated in FIG. 6 may be further selected as the outer edge by a smaller predetermined threshold b. In this way, a better symmetry of vehicle regions can be obtained accurately.

Here, the outer edge of the vehicle region is divided into the plural subsegments, and symmetry of the corresponding subsegments on both sides of the axis of symmetry is considered as follows. With respect to the outer edge of the vehicle, the symmetry consideration contributions of different parts are maybe different; so that, for example, the outer edges of the vehicle may be generally divided into an outer edge part of the top of the vehicle, an outer edge part of the window of the vehicle, and an outer edge part under the window of the vehicle, according to such different length regions. For example, the horizontal edge of the top of the vehicle may be divided sharply, namely the subsegments may be more delicate, and the outer edge part under the window of the vehicle may be divided roughly, namely the subsegments may be more sparse.

In step S133, with respect to the corresponding subsegments on both sides of the axis of symmetry, corresponding points sampling and gradient calculating of the sampling points are performed, respectively.

Here the corresponding points may be points of the corresponding subsegments on both sides of the axis of symmetry, that the vertical coordinates are the same and the horizontal coordinates are different. The gradient calculating here is based on a value type used in the subsequent degree of symmetry calculating, and may only be the direction of gradient, only the magnitude of the gradient, or both of the direction of gradient and the magnitude of the gradient.

In step S134, the degree of symmetry of the corresponding subsegments on both sides of the axis of symmetry are calculated, based on the calculated gradient of the sampling points of the corresponding sebsegments.

With respect to calculation of the degree of symmetry, the sum of square differences of the gradient of the corresponding sampling points of the corresponding subsegments on both sides of the axis of symmetry may be directly calculated. Certainly, it may use other methods of calculating the difference, such as the sum of the absolute values of the differences.

For example, it is supposed that the left and right outer edges are divided into n subsegments s1, s2, ..., sn. With respect to the i-th subsegment, $m_i$ sampling points are sampled, the gradient corresponding to j-th sampling point on both sides of the axis of symmetry is represented by $G_{left}(i,j)$ and $G_{right}(i,j)$, where $j \in (1, m_i)$, n and m are an integer greater than 2 respectively, weights corresponding to the sampling points are represented by w(i,j).

For example, the degree of symmetry $Sym_i$ of subsegment i may be calculated according to the following equation (1).

$$Sym_i = \frac{1}{m_i} \times \sum_{j=1}^{m_i} W(i,j) \times (G_{left}(i,j) - G_{right}(i,j))^2 \qquad (1)$$

In step S135, the degree of symmetry of the vehicle candidate regions is calculated based on the degrees of symmetry of all corresponding subsegments.

For example, the degrees of symmetry Sym of the whole vehicle candidate regions may be calculated according to the following equation (2),

$$Sym = \frac{1}{n} \times \sum_{i=1}^{n} W_i \times Sym_i \qquad (2)$$

where $W_i$ represents the weight of degree of symmetry of i-th subsegment in calculation of the degree of symmetry of the whole vehicle candidate region.

In this way, the degree of symmetry of the whole vehicle candidate region is obtained.

However, the above equations (1) and (2) are just examples, and other equations for calculating the degree of symmetry may be selected as needed, as long as the equation indicates a feature that the better the correspondence between both sides of the axis of symmetry, the better the degree of symmetry.

It should be noted that in the above method, the step of dividing the subsegments may be omitted, but the sampling and gradient calculation of the outer edge may be performed directly at equal or unequal distance so as to calculate the degree of symmetry.

<1.3 The second example of the calculating method of determining the degree of symmetry of the vehicle candidate regions>

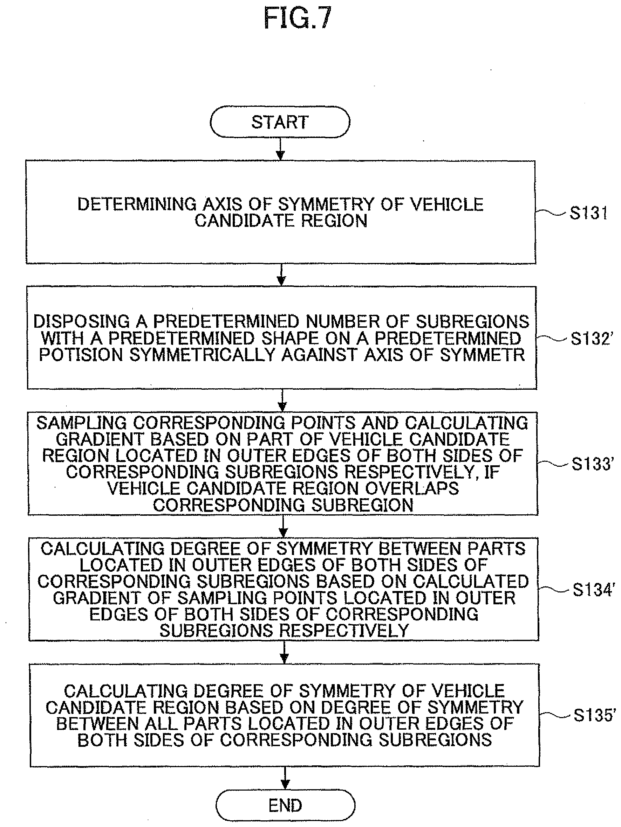

FIG. 7 is a flowchart illustrating the second example of the calculating method 130' of determining the degree of symmetry of the vehicle candidate regions according to the embodiment of the present invention. This method may be used in step S130 of the method of detecting the vehicle as illustrated in FIG. 1.

The main difference between the second example of the calculating method of determining the degree of symmetry and the first example of the calculating method of determining the degree of symmetry as illustrated in FIG. 3 are steps S132' and S133'. Accordingly, steps S132' and S133' are described in detail. The description of step S131 is omitted, it can be referred to FIG. 4 and its description.

First, the invention motivation of the second example of the calculating method of determining the degree of symmetry is explained, so as to facilitate the understanding of it. In the method of calculating the degree of symmetry as illustrated in FIG. 4, an output result of high symmetry can be obtained as long as the region has a high degree of symmetry. However, the actual conditions are not met in every cases. For example, if the vehicle candidate region obtained in step S120 of FIG. 1 is really a tree, the tree could be shown as the connected region in the disparity map and be approximated to be a triangle, accordingly, an output result of high degree of symmetry is obtained. As another example, if the vehicle candidate region obtained by dividing is a traffic box in the middle of the road, an output result of high degree of symmetry could also be obtained.

In order to avoid the possibility that a non-vehicle such as a tree or a traffic box is shown as an object having good symmetry in the disparity map, a contractible template of the vehicle edge may be disposed according to the shape of the vehicle. If the edge of the vehicle candidate region is not located in the template, the vehicle candidate region may be abandoned or be given a bad estimated value of a degree of symmetry. The contractible template of the vehicle edge may be formed approximately by a predetermined number of subregions with a predetermined shape that make up an approximate outline of the vehicle.

In step S132', a predetermined number of subregions with a predetermined shape are disposed on a predetermined position symmetrically with respect to the axis of symmetry.

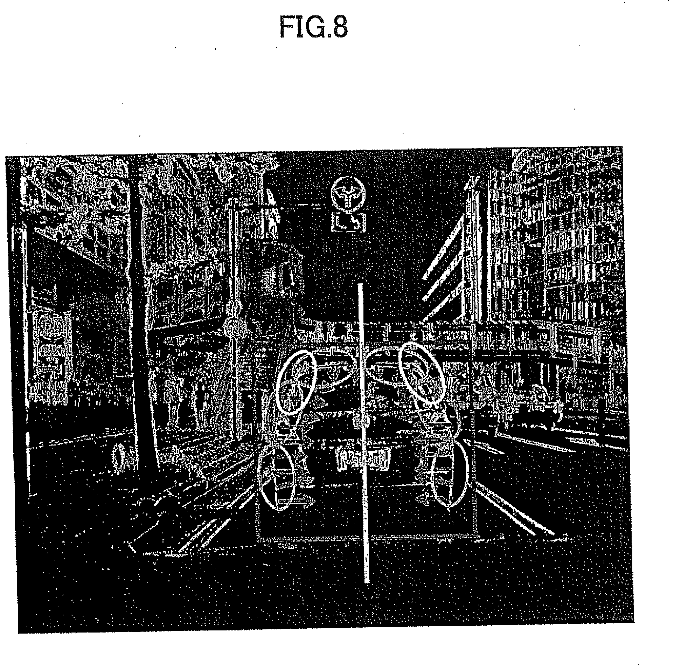

An example of disposing the subregions is illustrated in FIG. 8. Ellipses in the figure represents the subregions. In this example, the subregions are disposed at the top of the vehicle, the corner of the top of the vehicle, the edge of the window of the vehicle, and the edge under the window of the vehicle on both sides, respectively. Those subregions generally simulate the outline of an ordinary vehicle shape, and have contractibility. When actually disposed, the outline may be contracted accordingly, based on the width or height of the vehicle candidate region having a degree of symmetry thereof to be calculated.

Moreover, the number and shape of the regions may be set in any way as needed, for example, it may not be limited to 3 on both sides, but 4, 5 or 6, etc. The shape may be square, round, etc.

Gradient vectors of sampling points are illustrated as arrows in FIG. 8.

In step S133', corresponding points sampling and gradient calculations are performed based on parts of the vehicle candidate region located in the outer edges of both sides of the corresponding subregions respectively, if the vehicle candidate region overlaps a corresponding subregion.

For example, if the vehicle candidate region does not overlap a template subregion or any template subregions, it means that the shape of the vehicle candidate region does not resemble the vehicle represented by the template. In this case, the calculation may be terminated directly or the vehicle candidate region may be abandoned; or the degree of symmetry of the region may be set to a negative value, namely, it is used as a negating factor of the whole calculation of the degree of symmetry.

The corresponding points sampling and gradient calculation may be performed similarly based on parts of the vehicle candidate region located in the outer edges of both sides of the corresponding subregions respectively, as illustrated in step S133 of FIG. 4.

In step S134', the degree of symmetry between the parts located in the outer edges of both sides of the corresponding subregions is calculated based on the calculated gradient of the sampling points located in the outer edges of both sides of the corresponding subregions respectively. The operation of step S134' is similar to step S134 of FIG. 4.

In step S135', the degree of symmetry of the vehicle candidate region is calculated based on the degrees of symmetry between all parts located in the outer edges of both sides of the corresponding subregions. The operation of step S135' is similar to step S135 of FIG. 4.

According to the example of calculation method as illustrated in FIG. 7, a shape factor of the vehicle is considered in the process of calculating the degree of symmetry; therefore, a case that the vehicle candidate region having high symmetry and a shape being very different from an ordinary vehicle is given a high degree of symmetry, can be avoided.

<1.4 The third example of the calculating method of determining the degree of symmetry of the vehicle candidate regions>

FIG. 9 is a flowchart illustrating the third example of the calculating method of determining the degree of symmetry of the vehicle candidate regions according to the embodiment of the present invention. This method may be used in step S130 of the method of detecting the vehicle as illustrated in FIG. 1.

In the third example of the embodiment, an interference optimization of the axis of symmetry and adjustment of the vehicle candidate region is combined; therefore, one vehicle candidate region may be divided into two vehicle candidate regions.

In step S1310, the axis of symmetry is initially designated at a predetermined position.

For example, the axis of symmetry is initially designated at the central position in the horizontal direction of the vehicle candidate region.

In step S1320, the degree of symmetry of the vehicle candidate regions with respect to the axis of symmetry is calculated. After the vehicle candidate region and the axis of symmetry have been determined, the calculation of the degree of symmetry of the vehicle candidate regions may use the method as illustrated in FIG. 4 and FIG. 7. However, the present invention is not limited to this and may use other methods of calculating the degree of symmetry.

In step S1330, the axis of symmetry is moved to the left or right with a predetermined step length and the vehicle candidate region is adjusted accordingly.

In the example as illustrated in FIG. 10, for example, the initial axis of symmetry is illustrated by the short dotted line and located in the central position. In step S1330, the axis of symmetry may be moved to the left or right with a predetermined step length in a manner of scanning, and the vehicle candidate region may be adjusted accordingly. For example, if the axis of symmetry is moved to the left, the right outer edge can be determined from a right region corresponding to the left outer edge, and if the axis of symmetry is moved to the right, the left outer edge can be determined from a left region corresponding to the right outer edge.

In step S1340, the degree of symmetry of the adjusted vehicle candidate regions with respect to the moved axis of symmetry is calculated.

In step S1350, it is determined whether a predetermined termination condition is met.

The predetermined termination condition may be, for example, the axis of symmetry has been moved a predetermined number of times, the axis of symmetry has been moved out of the outermost edge, or the degree of symmetry continues to decline enough, etc.

In step S1350, if the predetermined termination condition is not met, the process jumps to step S1330.

In step S1350, if the predetermined termination condition is met (YES in S1350), the process goes to step S1360. the axis of symmetry having the highest degree of symmetry or the axis of symmetry having a degree of symmetry satisfying a predetermined threshold is regarded as a final axis of symmetry; the vehicle candidate region corresponding to the final axis of symmetry is regarded as a final vehicle candidate region; and the degree of symmetry calculated from the final axis of symmetry is regarded as the calculated degree of symmetry of the vehicle candidate regions. And then, the process terminates.

In an example as illustrated in FIG. 10, two axes of symmetry and two adjusted vehicle candidate regions are obtained as illustrated by a long dotted line, and the degree of symmetry of the adjusted vehicle candidate regions is also obtained by calculation. Actually, an effect that two vehicle candidate regions is obtained by further dividing the vehicle candidate region, is obtained.

<1.5 an example of calculating a degree of symmetry of based on the histogram in the gradient direction>

In the following, an example of calculating a degree of symmetry according to the histogram in the gradient direction is described with reference to FIGs. 11, 12 and 13.

By using the histogram, the degree of symmetry of the vehicle candidate regions with respect to the axis of symmetry can be reviewed in a statistical sense.

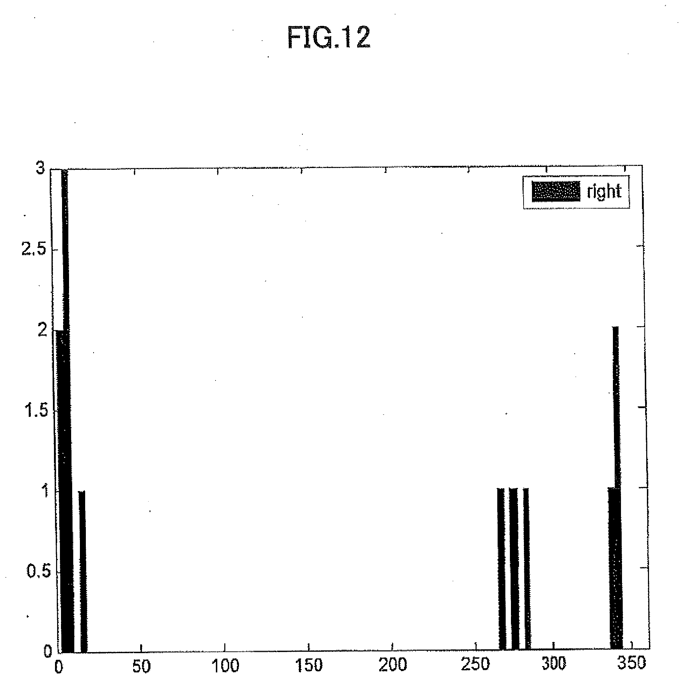

With respect to sampling points, after the corresponding gradient is obtained by calculation, as an example, the histogram in the gradient direction on the left side of the vehicle candidate region as illustrated in FIG. 11 is obtained, and the histogram in the gradient direction on the right side of the vehicle candidate region as illustrated in FIG. 12 is obtained. The abscissa axis represents a gradient direction and is represented by an angle, and the ordinate axis is a number of the sampling points of the determination value.

In order to perform matching better, the gradient direction on the left side may be a mirror transformed according to the following equation (3),

$$\theta_{new}=\begin{cases}\pi-\theta, & \text{if } 0\leq\theta<\dfrac{\pi}{2}, \dfrac{\pi}{2}<\theta\leq\pi \\ 3\pi-\theta, & \text{if } \pi<\theta<\dfrac{3\pi}{2}, \dfrac{3\pi}{2}<\theta<\pi\end{cases} \qquad (3)$$

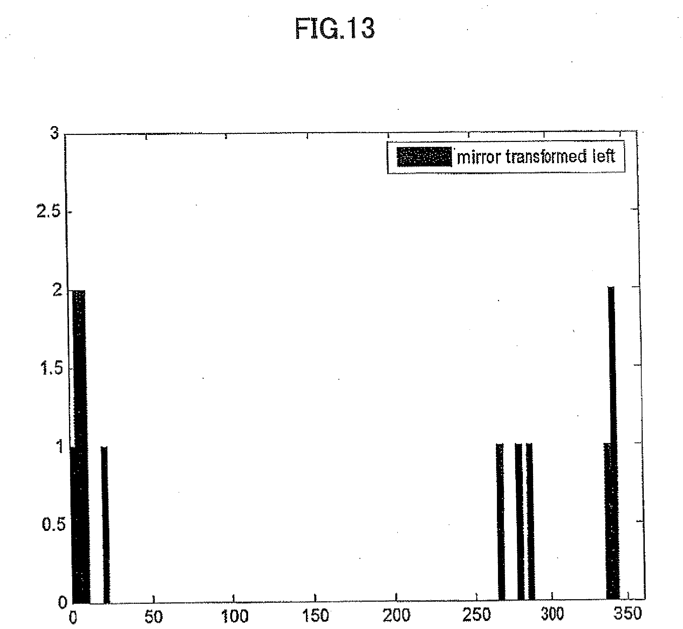

the mirror transformed histogram in the gradient direction on the left side of the vehicle candidate region is illustrated as FIG. 13.

In this way, if the right histogram has a bar and the mirror transformed left histogram has a corresponding bar, for example, a bar exists at a 330° angle respectively, the height of those two bars are subtracted. That is, the number of sampling points that the gradient direction on the left and right sides of a 330° angle are subtracted and then a absolute value of this is obtained as the statistical difference between the left and right candidate regions at a 330° angle. With respect to the corresponding bars that exist in the right histogram and left mirror transformed histogram, the abscissa (gradient direction) may not be absolutely equal, but it may be regarded as equal if the difference of those two is within a predetermined range. Moreover, if there is a bar in the right region and there is not a bar in the left vehicle candidate region at an angle, the number of sampling points at the angle in the left vehicle candidate region may be set to zero. In this way, the sum of the number of sampling points at the corresponding angles is obtained and the normalization thereof is performed, for example, the result is divided by the number of left sampling points and the inverse thereof is calculated so as to obtain the value representing the degree of symmetry.

Additionally, in the above example, the mirror transformed left histogram may be matched to the right histogram. Alternatively, the mirror transformed right histogram may also be matched to the left histogram.

Moreover, in the calculation of gradient direction histogram, a different weight may be set for the sampling points of different angles.

As described above, the method of calculating the degree of symmetry is based on the gradient direction histogram. However, it should be noted that the present invention is not limited to this, alternatively, the degree of symmetry may also be calculated based on the gradient intensity histogram. In addition, the degree of symmetry may also be calculated based on both the gradient direction and the gradient intensity.

By using the above calculation of the gradient histogram, the degree of symmetry between the left and right sides of the vehicle candidate regions with respect to the axis of symmetry can be reviewed visually and robustly.

<2. other modification of the embodiment>

Additionally, other modification of the embodiment is described as follows.

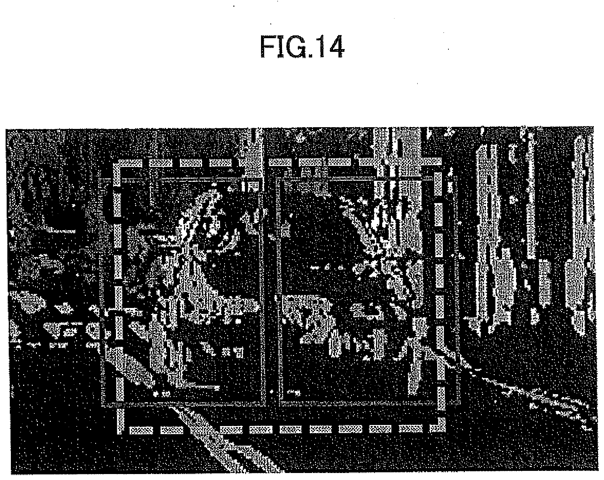

According to an embodiment, if the degree of symmetry of two vehicle candidate regions is low and the two vehicle candidate regions are close, the two vehicle candidate regions may be merged into one vehicle candidate region and the degree of symmetry of the merged vehicle candidate region may be reviewed. In this way, the problem that one vehicle is divided into two connected regions in the disparity map, is solved. The example of this case is illustrated in FIG. 14. Two initial vehicle candidate regions represented by the full line block are merged into a single vehicle candidate region in the dotted line blocks by the modification of the embodiment, and a good symmetry is obtained; therefore, misidentification of the vehicle is prevented.

According to another embodiment, if the degree of symmetry of a vehicle candidate region is low, as described above, the range of the disparity value for dividing the vehicle candidate region may be further narrowed down, so as to determine the vehicle candidate region having a high degree of symmetry correctly, as illustrated above in the FIGs. 4, 5 and 6.

According to another embodiment, if the degree of symmetry of a vehicle candidate region is low and the area of the vehicle candidate region is large, it may be considered whether the vehicle candidate region should be divided into two vehicle candidate regions or not by the method of moving the axis of symmetry as illustrated in FIGs. 9 and 10. Or, after a vehicle that meets the condition is detected, symmetry of other parts may be calculated once more again so as to determine whether other vehicles exist or not.

<3. overall configuration of the apparatus for detecting the vehicle>

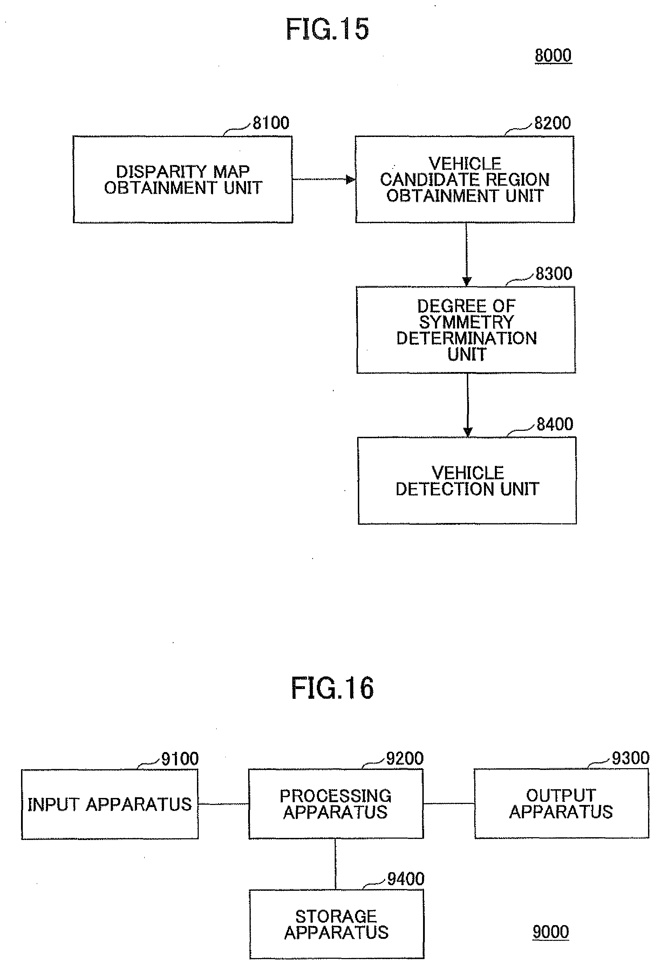

FIG. 15 is a block diagram illustrating a overall configuration of an apparatus for detecting the vehicle 8000 according to the embodiment of the present invention; and

As illustrated in FIG. 15, the apparatus for detecting a vehicle 8000 comprises: a disparity map obtainment unit 8100 for obtaining a disparity map including a vehicle region; a vehicle candidate region obtainment unit 8200 for obtaining a vehicle candidate region from the disparity map; a degree of symmetry determination unit 8300 for determining degree of symmetry of the vehicle candidate region; and a vehicle detection unit 8400 for detecting the vehicle based on the determined degree of symmetry of the vehicle candidate region.

The vehicle candidate region obtainment unit 8200 may obtain the vehicle candidate region from the disparity map by searching for a connected region in a predetermined range of disparity from the disparity map.

The vehicle candidate region obtainment unit 8200 may divide or merge the vehicle candidate region based on a result determined by the degree of symmetry of the vehicle candidate region.

The degree of symmetry determination unit 8300 may calculate the degree of symmetry of the vehicle candidate region based on gradient of points on the outer edge of the vehicle candidate region.

The step of calculating degree of symmetry of the vehicle candidate region by the degree of symmetry determination unit 8300 may comprise: a step of determining an axis of symmetry of the vehicle candidate region; a step of disposing a predetermined number of subregions with a predetermined shape on a predetermined position symmetrically with respect to the axis of symmetry; a step of sampling corresponding points and calculating the gradient based on parts of the vehicle candidate region located in the outer edges of both sides of the corresponding subregions respectively, if the vehicle candidate region overlaps a corresponding subregion; a step of calculating the degree of symmetry between the parts located in the outer edges of both sides of the corresponding subregions based on the calculated gradient of the sampling points located in the outer edges of both sides of the corresponding subregions respectively; and a step of calculating the degree of symmetry of the vehicle candidate region based on the degrees of symmetry between all parts located in the outer edges of both sides of the corresponding subregions.

Alternatively, the step of calculating the degree of symmetry of the vehicle candidate region by the degree of symmetry determination unit 8300 may comprise: a step of determining an axis of symmetry of the vehicle candidate region; a step of dividing selected outer edges of the vehicle candidate region into plural subsegments, in such a manner that the subsegments on both sides are divided accordingly with respect to the axis of symmetry; a step of sampling the corresponding points of corresponding subsegments on both sides of the axis of symmetry and calculating gradient of the sampling points respectively; a step of calculating degree of symmetry of the corresponding subsegments on both sides of the axis of symmetry based on the calculated the gradient of the sampling points of the corresponding subsegments; and a step of calculating the degree of symmetry of the vehicle candidate region based on the degrees of symmetry of all the corresponding subsegments.

The step of calculating the degree of symmetry of the corresponding subsegments on both sides of the axis of symmetry based on the calculated gradient of the sampling points of the corresponding subsegments may comprise: a step of obtaining a histogram in the gradient direction of the corresponding subsegments based on the calculated the gradient of the sampling points of the corresponding subsegments; and a step of calculating the degree of symmetry of the corresponding subsegments on both sides of the axis of symmetry based on the histogram in the gradient direction of the corresponding subsegments.

The step of calculating the degree of symmetry of the corresponding subsegments on both sides of the axis of symmetry based on the histogram in the gradient direction of the corresponding subsegments may comprise: a step of mirror transforming the histogram in the gradient direction of the corresponding subsegment on one side of the axis of symmetry into the other side of the axis of symmetry; and a step of matching the mirror transformed histogram in the gradient direction of the corresponding subsegment to the histogram in the gradient direction of the corresponding subsegment on the other side of the axis of symmetry, and estimating the degree of symmetry of the corresponding subsegments on both sides of the axis of symmetry based on a degree of matching.

According to the method for detecting the vehicle of the present invention, the vehicle candidate regions are obtained or segmented, the degree of symmetry of the vehicle candidate regions are determined, and the vehicle is detected based on the determined degree of symmetry of the vehicle candidate regions, by utilizing the characteristics that the disparity map has a uniform depth information and a projecting edge. Compared with the conventional method for detecting the vehicle based on the grey scale map, the method for detecting the vehicle according to the present invention can detect by a distance group without dependence on light conditions. First the vehicle candidate regions are roughly obtained or segmented, and then the degree of symmetry of the vehicle candidate regions are calculated; therefore, the present invention has a higher efficiency of processing, compared with a method for processing the whole image without classification. The method for detecting the vehicle according to the characteristics of the symmetry of the vehicle of the disparity map can detect the vehicle robustly and accurately.

<4. hardware configuration of a system for detecting the vehicle>

The present invention may also be implemented by a system for detecting the vehicle. FIG. 16 is a block diagram illustrating the hardware of the system for detecting the vehicle 9000 according to the embodiment of the present invention. As illustrated in FIG. 16, the system for detecting the vehicle 9000 may comprise: an input apparatus 9100 for input relevant image or information such as the left and right images picked up by a stereoscope camera or the depth information from the outside, for example, a keyboard, a mouse, and a communication network and a remote input device connected to the communication network, etc; a processing apparatus 9200 for implementing the above method or apparatus for detecting the vehicle according to the embodiment of the present invention, such as a CPU of the computer or a chip having a processing ability that is connected to the network like the internet (not illustrated) and transmits a processed image to the remote as needed; an output apparatus 9300 for outputting the result obtained by implementing the above vehicle detecting process to the outside, such as a display, a printer, and a communication network and a remote input device connected to the communication network, etc; and a storage apparatus 9400 for storing the disparity map, the axis of symmetry, the degree of symmetry, the connected region, the vehicle edge in the vehicle detecting process in a manner either volatile or nonvolatile, for example, any kinds of volatile memory or nonvolatile memory such as a RAM, a ROM, a hard disc or a semi-conductor memory.

<5. Summary>

According to an aspect of the present invention, a method for detecting a vehicle may comprise: a step of obtaining a disparity map including a vehicle region; a step of obtaining a vehicle candidate region from the disparity map; a step of determining the degree of symmetry of the vehicle candidate region; and a step of detecting the vehicle based on the determined degree of symmetry of the vehicle candidate region.

According to an aspect of the present invention, an apparatus for detecting a vehicle may comprise: a disparity map obtainment unit for obtaining a disparity map including a vehicle region; a vehicle candidate region obtainment unit for obtaining a vehicle candidate region from the disparity map; a degree of symmetry determination unit for determining the degree of symmetry of the vehicle candidate region; and a vehicle detection unit for detecting the vehicle based on the determined degree of symmetry of the vehicle candidate region.

According to the method for detecting the vehicle of the present invention, the vehicle candidate regions are obtained or segmented, the degree of symmetry of the vehicle candidate regions are determined, and the vehicle is detected based on the determined degree of symmetry of the vehicle candidate regions, by utilizing the characteristics that the disparity map has a uniform depth information and a projecting edge. Compared with the conventional method for detecting the vehicle based on the grey scale map, the method for detecting the vehicle according to the present invention can detect by a distance group without dependence on light conditions. First the vehicle candidate regions are roughly obtained or segmented, and then the degree of symmetry of the vehicle candidate regions are calculated; therefore, the present invention has a higher efficiency of processing, compared with a method for processing the whole image without classification. The method for detecting the vehicle according to the characteristics of the symmetry of the vehicle of the disparity map can detect the vehicle robustly and accurately.

Moreover, in the method and apparatus for detecting the vehicle candidate, the initial vehicle candidate regions are further divided or merged; therefore, the problem that a single vehicle candidate region was incorrectly determined as, for example, two initial vehicle candidate regions or two vehicle candidate regions were incorrectly determined as a single initial vehicle candidate region, can be solved.

Additionally, the vehicle candidate regions are further finely selected by disparity, whereas the problem that the images of the vehicle candidate regions are unsymmetrical, can be solved.

The above description is just an example for explaining, it may be modified and/or replaced.

For example, in the above description of moving the axis of symmetry with reference to FIG. 9 and FIG. 10, the axis of symmetry is moved to the left or right with a predetermined step length. However, the present invention is not limited to this, the step length may be obtained by learning, the adjacent step length may not be equal, or even the step length may be determined at random.

Moreover, in the above description of moving the axis of symmetry with reference to FIG. 9 and FIG. 10, after the axis of symmetry is determined, the corresponding vehicle candidate region is adjusted. However, it is just an example, alternatively, the axis of symmetry may be determined, after the left and right outer edges of vehicle for matching are determined.

In addition, in the above description of the method of detecting the vehicle with reference to FIG. 1, the vehicles may be detected according to the distance from near to far. However, it is just an example, the vehicles may be detected according to the distance from far to near as needed.

As described above, gradient direction is regarded as a feature for calculating the degree of symmetry. However, the present invention is not limited to this, gradient intensity may also be used as a feature for calculating the degree of symmetry, or both of the gradient direction and the gradient intensity may also be used as a feature for calculating the degree of symmetry.

As described above, the parameters may be set artificially. However, the present invention is not limited to this, the above parameters may be obtained by any kinds of learning methods or parameter optimization methods.

The basic principle of the present invention is described above with reference to the embodiment. Any one or all of the steps or units of the method or apparatus according to the present invention may be implemented by hardware, software or their combinations in any one of computing devices (including a processor, a storage medium, etc.) or a network of computing devices, and it can be implemented by persons skilled in the art who have read the specification of the present application.

Therefore, the present invention can also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

In addition, in the apparatus or method of the present invention, units or steps may be divided and/or recombined. The division and/or recombination should be regarded as an equivalent embodiment of the present invention. Steps of the above method may be performed in time order, however the performing sequence is not limited to the time order. Any steps may be performed in parallel or independently.

The present application is based on Chinese Priority Application No.201210057550.8 filed on March 7, 2012.

**Claims**

1. A method for detecting a vehicle, comprising:

   a step (S110) of obtaining a disparity map including a vehicle region;
   a step (S120) of obtaining a vehicle candidate region from the disparity map;
   a step (S130) of determining a degree of symmetry of the vehicle candidate region; and
   a step (S140) of detecting the vehicle based on the determined degree of symmetry of the vehicle candidate region,
   **characterized in that**
   the difference between the disparity values of the left and right outer edges of the vehicle candidate region is less than a predetermined threshold the step (S130) of determining the degree of symmetry of the vehicle candidate region comprising:

   a step of determining an axis of symmetry of the vehicle candidate region;
   a step of disposing a contractible template according to the shape of the vehicle, wherein the contractible template is formed by a predetermined number of subregions with a predetermined shape disposed on predetermined positions symmetrically with respect to the axis of symmetry and wherein the contractible template can be contracted based on the width or height of the vehicle candidate region;
   a step of sampling points corresponding to one another with respect to the axis of symmetry located in the corresponding subregions of the template and calculating their gradient, if the edge of the vehicle candidate region lies in a corresponding subregion of the template;
   a step of calculating the degree of symmetry between the parts of the vehicle candidate region located in the corresponding subregions based on the calculated gradient of the sampling points located in the corresponding subregions respectively; and
   a step of calculating the degree of symmetry of the vehicle candidate region based on the degrees of symmetry between all parts of the vehicle candidate region located in the corresponding subregions.

2. The method for detecting a vehicle according to claim 1, wherein the vehicle candidate region is obtained from the disparity map by searching for a connected region in a predetermined range of disparity from the disparity map.

3. The method for detecting a vehicle according to claim 1, wherein the step of obtaining the vehicle candidate region comprises dividing or merging the vehicle candidate region based on a result determined by the degree of symmetry of the vehicle candidate region.

4. The method for detecting a vehicle according to claim 1, wherein the step of calculating the degree of symmetry of the vehicle candidate region comprises:

   a step of determining an axis of symmetry of the vehicle candidate region;
   a step of dividing selected outer edges of the vehicle candidate region into plural subsegments, in such a manner that the subsegments on both sides are divided accordingly with respect to the axis of symmetry;
   a step of sampling corresponding points of corresponding subsegments on both sides of the axis of symmetry and calculating the gradient of the sampling points respectively;
a step of calculating the degree of symmetry of the corresponding subsegments on both sides of the axis of symmetry based on the calculated gradient of the sampling points of the corresponding sebsegments; and
a step of calculating the degree of symmetry of the vehicle candidate region based on the degrees of symmetry of all the corresponding subsegments.

5.   The method for detecting a vehicle according to claim 4, wherein the step of calculating the degree of symmetry of the corresponding subsegments on both sides of the axis of symmetry based on the calculated gradient of the sampling points of the corresponding subsegments comprises:

a step of obtaining a histogram in the gradient direction of the corresponding subsegments based on the calculated gradient of the sampling points of the corresponding subsegments; and
a step of calculating the degree of symmetry of the corresponding subsegments on both sides of the axis of symmetry based on the histogram in the gradient direction of the corresponding subsegments.

6.   The method for detecting a vehicle according to claim 5, wherein the step of calculating the degree of symmetry of the corresponding subsegments on both sides of the axis of symmetry based on the histogram in the gradient direction of the corresponding subsegments comprises:

a step of mirror transforming the histogram in the gradient direction of the corresponding subsegment on one side of the axis of symmetry into the other side of the axis of symmetry; and
a step of matching the mirror transformed histogram in the gradient direction of the corresponding subsegment to the histogram in the gradient direction of the corresponding subsegment on the other side of the axis of symmetry, and estimating the degree of symmetry of the corresponding subsegments on both sides of the axis of symmetry based on the degree of matching.

7.   The method for detecting a vehicle according to claim 1, wherein the step of calculating the degree of symmetry of the vehicle candidate region comprises:

(a) initially designating an axis of symmetry at a predetermined position;
(b) calculating the degree of symmetry of the vehicle candidate regions with respect to the axis of symmetry;
(c) moving the axis of symmetry to the left or right with a predetermined step length and adjusting the vehicle candidate region accordingly;
(d) calculating the degree of symmetry of the adjusted vehicle candidate regions with respect to the moved axis of symmetry; and
(e) repeating step (c) and (d) until a predetermined termination condition is met,

after the repeat is over, regarding the axis of symmetry having the highest degree of symmetry or the axis of symmetry having a degree of symmetry satisfying a predetermined threshold as a final axis of symmetry, regarding the vehicle candidate region corresponding to the final axis of symmetry as a final vehicle candidate region, and regarding the degree of symmetry calculated from the final axis of symmetry as the calculated degree of symmetry of the vehicle candidate regions.

8.   An apparatus (8000) for detecting a vehicle, comprising:

a disparity map obtainment unit (8100) for obtaining a disparity map including a vehicle region;
a vehicle candidate region obtainment unit (8200) for obtaining a vehicle candidate region from the disparity map;
a degree of symmetry determination unit (8300) for determining a degree of symmetry of the vehicle candidate region; and
a vehicle detection unit (8400) for detecting the vehicle based on the determined degree of symmetry of the vehicle candidate region,
**characterized in that**
the difference between the disparity values of the left and right outer edges of the vehicle candidate region is less than a predetermined threshold and
the degree of symmetry determination unit (8300) is configured to execute:

a step of determining an axis of symmetry of the vehicle candidate region;
a step of disposing a contractible template according to the shape of the vehicle, wherein the contractible template is formed by a predetermined number of subregions with a predetermined shape disposed on predetermined positions symmetrically with respect to the axis of symmetry and wherein the contractible template can be contracted based on the width or height of the vehicle candidate region;

a step of sampling points corresponding to one another with respect to the axis of symmetry located in the corresponding subregions of the template and calculating their gradient, if the edge of the vehicle candidate region lies in a corresponding subregion of the template;

a step of calculating the degree of symmetry between the parts of the vehicle candidate region located in the corresponding subregions based on the calculated gradient of the sampling points located in the corresponding subregions respectively; and

a step of calculating the degree of symmetry of the vehicle candidate region based on the degrees of symmetry between all parts of the vehicle candidate region located in the corresponding subregions.

**Patentansprüche**

1. Verfahren zum Erfassen eines Fahrzeugs, umfassend:

   einen Schritt (S110) zum Erlangen einer Disparitätskarte einschließlich einer Fahrzeugregion;
   einen Schritt (S120) zum Erlangen einer Fahrzeugkandidatenregion von der Disparitätskarte;
   einen Schritt (S130) zum Bestimmen eines Symmetriegrades der Fahrzeugkandidatenregion; und
   einen Schritt (S140) zum Erfassen des Fahrzeugs basierend auf dem bestimmten Symmetriegrad der Fahrzeugkandidatenregion,
   **dadurch gekennzeichnet, dass**
   der Unterschied zwischen den Disparitätswerten der linken und rechten Außenkante der Fahrzeugkandidatenregion weniger als ein vorbestimmter Schwellenwert ist,
   wobei der Schritt (S130) zum Bestimmen des Symmetriegrades der Fahrzeugkandidatenregion Folgendes umfasst:

      einen Schritt zum Bestimmen einer Symmetrieachse der Fahrzeugkandidatenregion;
      einen Schritt zum Anordnen einer zusammenziehbaren Mustervorlage gemäß der Form des Fahrzeugs, wobei die zusammenziehbare Mustervorlage durch eine vorbestimmte Anzahl von Teilregionen mit einer vorbestimmten Form gebildet ist, die die an vorbestimmten Positionen symmetrisch in Bezug auf die Symmetrieachse angeordnet sind, und wobei die zusammenziehbare Mustervorlage basierend auf der Breite oder Höhe der Fahrzeugkandidatenregion zusammengezogen werden kann;
      einen Schritt zum Abtasten von einander entsprechenden Punkten in Bezug auf die Symmetrieachse, die sich in den entsprechenden Teilregionen der Mustervorlage befinden, und zum Berechnen ihres Gradienten, wenn die Kante der Fahrzeugkandidatenregion in einer entsprechenden Teilregion der Mustervorlage liegt;
      einen Schritt zum Berechnen des Symmetriegrades zwischen den Teilen der Fahrzeugkandidatenregion, die sich in den entsprechenden Teilregionen befinden, basierend auf dem berechneten Gradienten der Abtastpunkte, die sich jeweils in den entsprechenden Teilregionen befinden; und
      einen Schritt zum Berechnen des Symmetriegrades der Fahrzeugkandidatenregion basierend auf den Symmetriegraden zwischen allen Teilen der Fahrzeugkandidatenregion, die sich in den entsprechenden Teilregionen befinden.

2. Verfahren zum Erfassen eines Fahrzeugs nach Anspruch 1, wobei die Fahrzeugkandidatenregion von der Disparitätskarte durch Suchen nach einer verbundenen Region in einem vorbestimmten Disparitätsbereich von der Disparitätskarte erlangt wird.

3. Verfahren zum Erfassen eines Fahrzeugs nach Anspruch 1, wobei der Schritt zum Erlangen der Fahrzeugkandidatenregion ein Aufteilen oder Vereinigen der Fahrzeugkandidatenregion basierend auf einem Ergebnis umfasst, das durch den Symmetriegrad der Fahrzeugkandidatenregion bestimmt wird.

4. Verfahren zum Erfassen eines Fahrzeugs nach Anspruch 1, wobei der Schritt zum Berechnen des Symmetriegrades der Fahrzeugkandidatenregion Folgendes umfasst:

   einen Schritt zum Bestimmen einer Symmetrieachse der Fahrzeugkandidatenregion;
   einen Schritt zum Aufteilen ausgewählter Außenkanten der Fahrzeugkandidatenregion in mehrere Untersegmente, auf eine solche Weise, dass die Untersegmente auf beiden Seiten in Bezug auf die Symmetrieachse entsprechend aufgeteilt werden;
einen Schritt zum jeweiligen Abtasten entsprechender Punkte von entsprechenden Untersegmenten auf beiden Seiten der Symmetrieachse und zum Berechnen des Gradienten der Abtastpunkte;
einen Schritt zum Berechnen des Symmetriegrades der entsprechenden Untersegmente auf beiden Seiten der Symmetrieachse basierend auf dem berechneten Gradienten der Abtastpunkte der entsprechenden Untersegmente; und
einen Schritt zum Berechnen des Symmetriegrades der Fahrzeugkandidatenregion basierend auf den Symmetriegraden von allen entsprechenden Untersegmenten.

5. Verfahren zum Erfassen eines Fahrzeugs nach Anspruch 4, wobei der Schritt zum Berechnen des Symmetriegrades der entsprechenden Untersegmente auf beiden Seiten der Symmetrieachse basierend auf dem berechneten Gradienten der Abtastpunkte der entsprechenden Untersegmente Folgendes umfasst:

einen Schritt zum Erlangen eines Histogramms in der Gradientenrichtung der entsprechenden Untersegmente basierend auf dem berechneten Gradienten der Abtastpunkte der entsprechenden Untersegmente; und
einen Schritt zum Berechnen des Symmetriegrades der entsprechenden Untersegmente auf beiden Seiten der Symmetrieachse basierend auf dem Histogramm in der Gradientenrichtung der entsprechenden Untersegmente.

6. Verfahren zum Erfassen eines Fahrzeugs nach Anspruch 5, wobei der Schritt zum Berechnen des Symmetriegrades der entsprechenden Untersegmente auf beiden Seiten der Symmetrieachse basierend auf dem Histogramm in der Gradientenrichtung der entsprechenden Untersegmente Folgendes umfasst:

einen Schritt zum spiegelgleichen Transformieren des Histogramms in der Gradientenrichtung des entsprechenden Untersegments auf einer Seite der Symmetrieachse auf die andere Seite der Symmetrieachse; und
einen Schritt zum Anpassen des spiegelgleich transformierten Histogramms in der Gradientenrichtung des entsprechenden Untersegments an das Histogramm in der Gradientenrichtung des entsprechenden Untersegments auf der anderen Seite der Symmetrieachse, und Schätzen des Symmetriegrades der entsprechenden Untersegmente auf beiden Seiten der Symmetrieachse basierend auf dem Anpassungsgrad.

7. Verfahren zum Erfassen eines Fahrzeuges nach Anspruch 1, wobei der Schritt zum Berechnen des Symmetriegrades der Fahrzeugkandidatenregion Folgendes umfasst:

(a) anfängliches Zuordnen einer Symmetrieachse zu einer vorbestimmten Position;
(b) Berechnen des Symmetriegrades der Fahrzeugkandidatenregionen in Bezug auf die Symmetrieachse;
(c) Bewegen der Symmetrieachse nach links oder rechts mit einer vorbestimmten Schrittlänge und Anpassen der Fahrzeugkandidatenregion dementsprechend;
(d) Berechnen des Symmetriegrades der angepassten Fahrzeugkandidatenregion in Bezug auf die bewegte Symmetrieachse; und
(e) Wiederholen von Schritt (c) und (d) bis eine vorbestimmte Beendigungsbedingung erfüllt ist, nachdem das Wiederholen vorbei ist, Betrachten der Symmetrieachse mit dem höchsten Symmetriegrad oder der Symmetrieachse mit einem Symmetriegrad, der einen vorbestimmten Schwellenwert erfüllt, als eine finale Symmetrieachse, Betrachten der Fahrzeugkandidatenregion entsprechend der finalen Symmetrieachse als eine finale Fahrzeugkandidatenregion, und Betrachten des Symmetriegrades, der von der finalen Symmetrieachse berechnet ist, als den berechneten Symmetriegrad der Fahrzeugkandidatenregionen.

8. Vorrichtung (8000) zum Erfassen eines Fahrzeugs, umfassend:

eine Disparitätskarten-Erlangungseinheit (8100) zum Erlangen einer Disparitätskarte einschließlich einer Fahrzeugregion;
eine Fahrzeugkandidatenregion-Erlangungseinheit (8200) zum Erlangen einer Fahrzeugkandidatenregion von der Disparitätskarte;
eine Symmetriegrad-Bestimmungseinheit (8300) zum Bestimmen eines Symmetriegrades der Fahrzeugkandidatenregion; und
eine Fahrzeugerfassungseinheit (8400) zum Erfassen des Fahrzeugs basierend auf dem bestimmten Symmetriegrad der Fahrzeugkandidatenregion,
**dadurch gekennzeichnet, dass**
der Unterschied zwischen den Disparitätswerten der linken und rechten Außenkante der Fahrzeugkandidatenregion weniger ist als ein vorbestimmter Schwellenwert, und
die Symmetriegrad-Bestimmungseinheit (8300) konfiguriert ist, das Folgende auszuführen:

> einen Schritt zum Bestimmen einer Symmetrieachse der Fahrzeugkandidatenregion;
> einen Schritt zum Anordnen einer zusammenziehbaren Mustervorlage gemäß der Form des Fahrzeugs, wobei die zusammenziehbare Mustervorlage durch eine vorbestimmte Anzahl von Teilregionen mit einer vorbestimmten Form gebildet ist, die an vorbestimmten Positionen symmetrisch in Bezug auf die Symmetrieachse angeordnet sind, und wobei die zusammenziehbare Mustervorlage basierend auf der Breite oder Höhe der Fahrzeugkandidatenregion zusammengezogen werden kann;
> einen Schritt zum Abtasten von einander entsprechenden Punkten in Bezug auf die Symmetrieachse, die sich in den entsprechenden Teilregionen der Mustervorlage befindet und Berechnen ihres Gradienten, wenn die Kante der Fahrzeugkandidatenregion in einer entsprechenden Teilregion der Mustervorlage liegt;
> einen Schritt zum Berechnen des Symmetriegrades zwischen den Teilen der Fahrzeugkandidatenregion, die sich in den entsprechenden Teilregionen befinden, basierend auf dem berechneten Gradienten der Abtastpunkte, die sich jeweils in den entsprechenden Teilregionen befinden; und
> einen Schritt zum Berechnen des Symmetriegrades der Fahrzeugkandidatenregion basierend auf den Symmetriegraden zwischen allen Teilen der Fahrzeugkandidatenregion, die sich in den entsprechenden Teilregionen befinden.

## Revendications

1. Procédé de détection d'un véhicule, comprenant :

   une étape (S110) d'obtention d'une carte de disparité comprenant une région de véhicule ;
   une étape (S120) d'obtention d'une région candidate de véhicule à partir de la carte de disparité ;
   une étape (S130) de détermination d'un degré de symétrie de la région candidate de véhicule ; et
   une étape (S140) de détection du véhicule en fonction du degré de symétrie déterminé de la région candidate de véhicule,
   **caractérisé en ce que**
   la différence entre les valeurs de disparité des bords externes gauche et droit de la région candidate de véhicule est inférieure à un seuil prédéterminé,
   l'étape (S130) de détermination du degré de symétrie de la région candidate de véhicule comprenant :

   une étape de détermination d'un axe de symétrie de la région candidate de véhicule ;
   une étape de placement d'un modèle contractable en fonction de la forme du véhicule, le modèle contractable étant formé par un nombre prédéterminé de sous-régions avec une forme prédéterminée disposée sur des positions prédéterminées de manière symétrique par rapport à l'axe de symétrie et le modèle contractable pouvant être contracté en fonction de la largeur ou de la hauteur de la région candidate de véhicule ;
   une étape d'échantillonnage de points correspondant les uns aux autres par rapport à l'axe de symétrie situé dans les sous-régions correspondantes du modèle et de calcul de leur gradient, si le bord de la région candidate de véhicule se situe dans la sous-région correspondante du modèle ;
   une étape de calcul du degré de symétrie entre les parties de la région candidate de véhicule située dans les sous-régions correspondantes en fonction du gradient calculé des points d'échantillonnage calculés dans les sous-régions correspondantes respectivement ; et
   une étape de calcul du degré de symétrie de la région candidate de véhicule en fonction des degrés de symétrie entre toutes les parties de la région candidate de véhicule situées dans les sous-régions correspondantes.

2. Procédé de détection d'un véhicule selon la revendication 1, dans lequel la région candidate de véhicule est obtenue à partir de la carte de disparité en recherchant une région reliée dans une plage prédéterminée de disparité à partir de la carte de disparité.

3. Procédé de détection d'un véhicule selon la revendication 1, dans lequel l'étape d'obtention de la région candidate de véhicule comprend la division ou la fusion de la région candidate de véhicule en fonction d'un résultat déterminé par le degré de symétrie de la région candidate de véhicule.

4. Procédé de détection d'un véhicule selon la revendication 1, dans lequel l'étape de calcul du degré de symétrie de la région candidate de véhicule comprend :

une étape de détermination d'un axe de symétrie de la région candidate de véhicule ;
une étape de division de bords externes sélectionnés de la région candidate de véhicule en plusieurs sous-segments, de sorte que les sous-segments sur les deux côtés soient divisés en conséquence par rapport à l'axe de symétrie ;
une étape d'échantillonnage de points correspondants de sous-segments correspondants sur les deux côtés de l'axe de symétrie et de calcul du gradient des points d'échantillonnage respectivement ;
une étape de calcul du degré de symétrie des sous-segments correspondants sur les deux côtés de l'axe de symétrie en fonction du gradient calculé des points d'échantillonnage des sous-segments correspondants ; et
une étape de calcul du degré de symétrie de la région candidate de véhicule en fonction des degrés de symétrie de tous les sous-segments correspondants.

5.  Procédé de détection d'un véhicule selon la revendication 4, dans lequel l'étape de calcul du degré de symétrie des sous-segments correspondants sur les deux côtés de l'axe de symétrie en fonction du gradient calculé des points d'échantillonnage des sous-segments correspondants comprend :

une étape d'obtention d'un histogramme dans la direction de gradient des sous-segments correspondants en fonction du gradient calculé des points d'échantillonnage des sous-segments correspondants ; et
une étape de calcul du degré de symétrie des sous-segments correspondants sur les deux côtés de l'axe de symétrie en fonction de l'histogramme dans la direction de gradient des sous-segments correspondants.

6.  Procédé de détection d'un véhicule selon la revendication 5, dans lequel l'étape de calcul du degré de symétrie des sous-segments correspondants sur les deux côtés de l'axe de symétrie en fonction de l'histogramme dans la direction de gradient des sous-segments correspondants comprend :

une étape de transformation par miroir de l'histogramme dans la direction de gradient du sous-segment correspondant sur un côté de l'axe de symétrie en autre côté de l'axe de symétrie ; et
une étape de mise en correspondance de l'histogramme transformé par le miroir dans la direction de gradient du sous-segment correspondant avec l'histogramme dans la direction de gradient du sous-segment correspondant sur l'autre côté de l'axe de symétrie, et d'estimation du degré de symétrie des sous-segments correspondants sur les deux côtés de l'axe de symétrie en fonction du degré de correspondance.

7.  Procédé de détection d'un véhicule selon la revendication 1, dans lequel l'étape de calcul du degré de symétrie de la région candidate de véhicule comprend :

(a) dans un premier temps la désignation d'un axe de symétrie en une position prédéterminée ;
(b) le calcul du degré de symétrie de régions candidates de véhicule par rapport à l'axe de symétrie ;
(c) le déplacement de l'axe de symétrie vers la gauche ou la droite avec une longueur de pas prédéterminée et l'ajustement de la région candidate de véhicule en conséquence ;
(d) le calcul du degré de symétrie des régions candidates de véhicule ajustées par rapport à l'axe de symétrie déplacé ; et
(e) la répétition de l'étape (c) et (d) jusqu'à ce qu'une condition de terminaison prédéterminée soit remplie, après la fin de la répétition, en ce qui concerne l'axe de symétrie présentant le degré de symétrie le plus élevé ou l'axe de symétrie présentant un degré de symétrie satisfaisant un seuil prédéterminé en tant qu'axe de symétrie final, en ce qui concerne la région candidate de véhicule correspondant à l'axe de symétrie final en tant que région candidate de véhicule, et en ce qui concerne le degré de symétrie calculé à partir de l'axe de symétrie final en tant que degré de symétrie calculé des régions candidates de véhicule.

8.  Appareil (8000) destiné à détecter un véhicule, comprenant :

une unité d'obtention de carte de disparité (8100) destinée à obtenir une carte de disparité comprenant une région de véhicule ;
une unité d'obtention de région candidate de véhicule (8200) destinée à obtenir une région candidate de véhicule à partir de la carte de disparité ;
une unité de détermination de degré de symétrie (8300) destinée à déterminer un degré de symétrie de la région candidate de véhicule ; et
une unité de détection de véhicule (8400) destinée à détecter le véhicule en fonction du degré de symétrie déterminé de la région candidate de véhicule,

**caractérisé en ce que**

la différence entre les valeurs de disparité des bords externes gauche et droit de la région candidate de véhicule est inférieure à un seuil prédéterminé et

l'unité de détermination de degré de symétrie (8300) est conçue pour exécuter :

une étape de détermination d'un axe de symétrie de la région candidate de véhicule ;

une étape de placement d'un modèle contractable en fonction de la forme du véhicule, le modèle contractable étant formé par un nombre prédéterminé de sous-régions avec une forme prédéterminée disposée sur des positions prédéterminées de manière symétrique par rapport à l'axe de symétrie et le modèle contractable pouvant être contracté en fonction de la largeur ou de la hauteur de la région candidate de véhicule ;

une étape d'échantillonnage de points correspondant les uns aux autres par rapport à l'axe de symétrie situé dans les sous-régions correspondantes du modèle et de calcul de leur gradient, si le bord de la région candidate de véhicule se situe dans une sous-région correspondante du modèle ;

une étape de calcul du degré de symétrie entre les parties de la région candidate de véhicule située dans les sous-régions correspondantes en fonction du gradient calculé des points d'échantillonnage situés dans les sous-régions correspondantes respectivement ; et

une étape de calcul du degré de symétrie de la région candidate de véhicule en fonction des degrés de symétrie entre toutes les parties de la région candidate de véhicule située dans les sous-régions correspondantes.

# FIG.1

```
                    ┌──────────────┐
                    │    START     │
                    └──────┬───────┘
                           │
                           ▼
┌─────────────────────────────────────────────────────────┐
│                                                          │
│  OBTAINING DISPARITY MAP INCLUDING VEHICLE REGION        │──S110
│                                                          │
└──────────────────────────┬──────────────────────────────┘
                           │
                           ▼
┌─────────────────────────────────────────────────────────┐
│                                                          │
│        OBTAINING VEHICLE CANDIDATE REGION FROM           │──S120
│                   DISPARITY MAP                          │
│                                                          │
└──────────────────────────┬──────────────────────────────┘
                           │
                           ▼
┌─────────────────────────────────────────────────────────┐
│                                                          │
│       DETERMINING DEGREE OF SYMMETRY OF VEHICLE          │──S130
│                  CANDIDATE REGIONS                       │
│                                                          │
└──────────────────────────┬──────────────────────────────┘
                           │
                           ▼
┌─────────────────────────────────────────────────────────┐
│                                                          │
│ DETECTING VEHICLE BASED ON DETERMINED DEGREE OF          │──S140
│     SYMMETRY OF VEHICLE CANDIDATE REGIONS                │
│                                                          │
└──────────────────────────┬──────────────────────────────┘
                           │
                           ▼
                    ┌──────────────┐
                    │     END      │
                    └──────────────┘
```

FIG.2

# FIG.3

```
                    ┌─────────────┐
                    │    START    │
                    └─────────────┘
                           │
                           ▼
┌──────────────────────────────────────────────────┐
│     DETERMINING AXIS OF SYMMETRY OF VEHICLE        │ ～S131
│              CANDIDATE REGION                      │
└──────────────────────────────────────────────────┘
                           │
                           ▼
┌──────────────────────────────────────────────────┐
│     DIVIDING SELECTED OUTER EDGES OF VEHICLE       │
│   CANDIDATE REGION INTO PLURAL SUBSEGMENTS, IN     │
│  SUCH A MANNER THAT SUBSEGMENTS ON BOTH SIDES      │ ～S132
│    ARE DIVIDED CORRESPONDINGLY AGAINST AXIS OF     │
│                   SYMMETRY                         │
└──────────────────────────────────────────────────┘
                           │
                           ▼
┌──────────────────────────────────────────────────┐
│        SAMPLING CORRESPONDING POINTS OF           │
│  CORRESPONDING SUBSEGMENTS ON BOTH SIDES OF        │ ～S133
│  AXIS OF SYMMETRY AND CALCULATING GRADIENT OF      │
│         SAMPLING POINTS RESPECTIVELY              │
└──────────────────────────────────────────────────┘
                           │
                           ▼
┌──────────────────────────────────────────────────┐
│       CALCULATING DEGREE OF SYMMETRY OF           │
│   CORRESPONDING SUBSEGMENTS ON BOTH SIDES OF       │
│  AXIS OF SYMMETRY BASED ON CALCULATED GRADIENT     │ ～S134
│       OF SAMPLING POINTS OF CORRESPONDING          │
│                 SUBSEGMENTS                        │
└──────────────────────────────────────────────────┘
                           │
                           ▼
┌──────────────────────────────────────────────────┐
│     CALCULATING DEGREE OF SYMMETRY OF VEHICLE      │
│  CANDIDATE REGIONS BASED ON DEGREES OF SYMMETRY    │ ～S135
│       OF ALL CORRESPONDING SUBSEGMENTS            │
└──────────────────────────────────────────────────┘
                           │
                           ▼
                    ┌─────────────┐
                    │     END     │
                    └─────────────┘
```

FIG.4

## FIG.5

# FIG.6

# FIG.7

START

DETERMINING AXIS OF SYMMETRY OF VEHICLE
CANDIDATE REGION ⎯ S131

DISPOSING A PREDETERMINED NUMBER OF SUBREGIONS
WITH A PREDETERMINED SHAPE ON A PREDETERMINED
POTISION SYMMETRICALLY AGAINST AXIS OF SYMMETR ⎯ S132'

SAMPLING CORRESPONDING POINTS AND CALCULATING
GRADIENT BASED ON PART OF VEHICLE CANDIDATE
REGION LOCATED IN OUTER EDGES OF BOTH SIDES OF
CORRESPONDING SUBREGIONS RESPECTIVELY, IF
VEHICLE CANDIDATE REGION OVERLAPS
CORRESPONDING SUBREGION ⎯ S133'

CALCULATING DEGREE OF SYMMETRY BETWEEN PARTS
LOCATED IN OUTER EDGES OF BOTH SIDES OF
CORRESPONDING SUBREGIONS BASED ON CALCULATED
GRADIENT OF SAMPLING POINTS LOCATED IN OUTER
EDGES OF BOTH SIDES OF CORRESPONDING
SUBREGIONS RESPECTIVELY ⎯ S134'

CALCULATING DEGREE OF SYMMETRY OF VEHICLE
CANDIDATE REGION BASED ON DEGREE OF SYMMETRY
BETWEEN ALL PARTS LOCATED IN OUTER EDGES OF
BOTH SIDES OF CORRESPONDING SUBREGIONS ⎯ S135'

END

# FIG.8

# FIG.9

START

INITIALLY DESIGNATING AXIS OF SYMMETRY AT A PREDETERMINED POSITION — S1310

CALCULATING DEGREE OF SYMMETRY OF VEHICLE CANDIDATE REGIONS AGAINST AXIS OF SYMMETRY — S1320

MOVING AXIS OF SYMMETRY TO THE LEFT OR RIGHT WITH A PREDETERMINED STEP LENGTH AND ADJUSTING VEHICLE CANDIDATE REGION ACCORDINGLY — S1330

CALCULATING DEGREE OF SYMMETRY OF ADJUSTED VEHICLE CANDIDATE REGIONS WITH RESPECT TO MOVED AXIS OF SYMMETRY — S1340

S1350

NO — IS TERMINATION CONDITION SATISFIED?

YES

REGARDING AXIS OF SYMMETRY HAVING THE HIGHEST DEGREE OF SYMMETRY OR AXIS OF SYMMETRY HAVING A DEGREE OF SYMMETRY SATISFYING A PREDETERMINED THRESHOLD AS FINAL AXIS OF SYMMETRY, REGARDING VEHICLE CANDIDATE REGION CORRESPONDING TO FINAL AXIS OF SYMMETRY AS FINAL VEHICLE CANDIDATE REGION, AND REGARDING DEGREE OF SYMMETRY CALCULATED FROM FINAL AXIS OF SYMMETRY AS CALCULATED DEGREE OF SYMMETRY OF VEHICLE CANDIDATE REGIONS — S1360

END

# FIG.10

# FIG.11

# FIG.12

# FIG.13

FIG.14

# FIG.15

8000

```
┌─────────────────────┐        ┌─────────────────────┐
│  /8100              │        │  /8200              │
│  DISPARITY MAP      │───────▶│  VEHICLE            │
│  OBTAINMENT UNIT    │        │  CANDIDATE REGION   │
│                     │        │  OBTAINMENT UNIT    │
└─────────────────────┘        └─────────────────────┘
                                          │
                                          ▼
                               ┌─────────────────────┐
                               │  /8300              │
                               │  DEGREE OF          │
                               │  SYMMETRY           │
                               │  DETERMINATION      │
                               │  UNIT               │
                               └─────────────────────┘
                                          │
                                          ▼
                               ┌─────────────────────┐
                               │  /8400              │
                               │  VEHICLE            │
                               │  DETECTION UNIT     │
                               │                     │
                               └─────────────────────┘
```

# FIG.16

```
┌─────────────────┐     ┌─────────────────┐     ┌─────────────────┐
│  /9100          │     │  /9200          │     │  /9300          │
│ INPUT APPARATUS │─────│  PROCESSING     │─────│  OUTPUT         │
│                 │     │  APPARATUS      │     │  APPARATUS      │
└─────────────────┘     └─────────────────┘     └─────────────────┘
                                │
                        ┌─────────────────┐
                        │  /9400          │
                        │  STORAGE        │        9000
                        │  APPARATUS      │
                        └─────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201210057550

**Non-patent literature cited in the description**

• Multi-Resolution Vehicle Detection Using Artificial Vision. **BROGGI, A. ; CERRI, P. et al.** Intelligent Vehicles Symposium. IEEE, 14 June 2004, 310-314
• **ZHENCHENG HU ; KEIICHI UCHIMUR.** U-V-Disparity: An Efficient Algorithm for Stereovision Based Scene Analysis. *Proceedings of the IEEE Intelligent Vehicles Symposium,* 2005

• Vehicle detection based on the stereo concept of (axis, width, disparity) symmetry map. **YAQIAN LI et al.** INTELLIGENT TRANSPORTATION SYSTEMS, 2008, ITSC 2008. 11TH INTERNATIONAL IEEE CONFERENCE. IEEE, 12 October 2008, 778-783